# EUROPEAN PATENT SPECIFICATION

(11) **EP 3 256 952 B1**
(45) Date of publication and mention of the grant of the patent: **05.12.2018**
(21) Application number: 16708511.7
(22) Date of filing: 05.02.2016
(51) Int. Cl.: G06F 13/16, G06F 9/48

(54) **SYSTEMS AND METHODS FOR PROVIDING KERNEL SCHEDULING OF VOLATILE MEMORY MAINTENANCE EVENTS**
SYSTEME UND VERFAHREN ZUR BEREITSTELLUNG VON KERNPLANUNG VON WARTUNGSEREIGNISSEN EINES FLÜCHTIGEN SPEICHERS
SYSTÈMES ET PROCÉDÉS DE PLANIFICATION AU NIVEAU DU NOYAU D'ÉVÉNEMENTS DE MAINTENANCE D'UNE MÉMOIRE VOLATILE

(30) Priority: 13.02.2015 US 201514621929
(43) Date of publication of application: 20.12.2017
(73) Proprietor: Qualcomm Incorporated, San Diego, CA 92121-1714 (US)
(72) Inventor: CHUN, Dexter Tamio, San Diego, California 92121 (US); LI, Yanru, San Diego, California 92121 (US)
(74) Representative: Wegner, Hans
(86) International application number: PCT/US2016/016874
(87) International publication number: WO 2016/130439

(56) References cited:
- US-A1- 2007 198 771
- US-B1- 7 020 741

## Description

Portable computing devices (*e.g*., cellular telephones, smart phones, tablet computers, portable digital assistants (PDAs), and portable game consoles) and other computing devices continue to offer an ever-expanding array of features and services, and provide users with unprecedented levels of access to information, resources, and communications. To keep pace with these service enhancements, such devices have become more powerful and more complex. Portable computing devices now commonly include a system on chip (SoC) comprising one or more chip components embedded on a single substrate (*e.g*., one or more central processing units (CPUs), a graphics processing unit (GPU), digital signal processors, *etc*.). The SoC may be coupled to one or more volatile memory devices, such as, dynamic random access memory (DRAM) via high-performance data and control interface(s).

High-performance DRAM memory typically requires various types of hardware maintenance events to be performed. For example, periodic calibration and training may be performed to provide error-free operation of the interface at relatively high clock frequencies (*e.g*., GHz clock frequencies). Memory refresh is a background maintenance process required during the operation of DRAM memory because each bit of memory data is stored as the presence or absence of an electric charge on a small capacitor on the chip. As time passes, the charges in the memory cells leak away, so without being refreshed the stored data would eventually be lost. To prevent this, a DRAM controller periodically reads each cell and rewrites it, restoring the charge on the capacitor to its original level.

These hardware maintenance events may undesirably block CPU traffic. For example, in existing systems, the hardware maintenance events arc independent events controlled by a memory controller, which can result in memory access collisions between active CPU processes and these periodic independent DRAM hardware events. When a collision occurs, the CPU process may temporarily stall while the DRAM hardware event is being serviced. Servicing the DRAM may also close or reset open pages that the CPU process is using. It is undesirable to stall the CPU processes and, therefore, the DRAM hardware events are typically done on an individual basis. The SoC hardware may have the ability to defer DRAM hardware events but it is typically only for very short periods of time (*e.g*., on the nanosecond level). As a result, active CPU processes may incur undesirable inefficiencies due to probabilistic blocking caused by numerous individual DRAM hardware events.

Accordingly, there is a need to provide systems and methods for reducing memory access collisions caused by periodic volatile memory maintenance events and improving CPU process memory efficiency.

US 2007/198771 A1 discloses that a dynamic memory refresh controller includes a first in first out (FIFO) memory, a scheduler, a refresh control unit, and a signal generator. The FIFO memory stores and manages requests from a master device. The scheduler reorders the requests from the master device based on priorities assigned to the master device or provides information about following requests. The refresh control unit determines a refresh timing of the dynamic memory based on the existence of the following requests and an idle state of banks constituting the dynamic memory. Accordingly, the dynamic memory refresh controller may maximize a refresh trigger interval by changing the management order of the requests from the master device based on the priority of the response latency.

US 7 020 741 B1 discloses for use with a memory controller in a data processor that is capable of executing memory refresh requests to refresh a memory of the data processor, an apparatus and method for scheduling execution of the memory refresh requests. The apparatus comprises a periodic memory refresh hint unit that is capable of sending to the memory controller a data signal that comprises a periodic memory refresh hint. The periodic memory refresh hint informs the memory controller of an optimal time for a memory refresh to occur. The memory controller may immediately execute a memory refresh request when it arrives or delay the execution of the memory refresh request until a more opportune time. This feature enables the memory controller to reduce memory access latency in scheduling memory transactions.

### SUMMARY OF THE DISCLOSURE

Systems, methods, and computer programs are disclosed for scheduling volatile memory maintenance events. One embodiment is a method comprising: a memory controller determining a time-of-service (ToS) window for executing a maintenance event for a volatile memory device coupled to the memory controller via a memory data interface; the memory controller providing an interrupt signal to a processing unit; determining a priority for the maintenance event; and scheduling the maintenance event according to the priority.

Another realization is a system comprising a dynamic random access memory (DRAM) device and a system on chip (SoC). The SoC comprises a processing device and a DRAM controller electrically coupled to the DRAM device via a memory data interface. The DRAM controller comprises a scheduler module configured to determine a time-of-service (ToS) window for executing a maintenance event for the DRAM device. The ToS window is defined by an interrupt signal provided to the processing device and a deadline for executing the maintenance. The processing unit receives the interrupt signal from the DRAM controller. In response to the interrupt signal, the processing unit determines a priority for the maintenance event. The maintenance event is scheduled according to the priority.

### BRIEF DESCRIPTION OF THE DRAWINGS

In the Figures, like reference numerals refer to like parts throughout the various views unless otherwise indicated. For reference numerals with letter character designations such as "102A" or "102B", the letter character designations may differentiate two like parts or elements present in the same Figure. Letter character designations for reference numerals may be omitted when it is intended that a reference numeral to encompass all parts having the same reference numeral in all Figures.
FIG. 1 is a block diagram of an embodiment of a system for scheduling volatile memory maintenance events.
FIG. 2 is a block/flow diagram illustrating the components and operation of the system of FIG. 1.
FIG. 3 is a flowchart illustrating an embodiment of a method for scheduling DRAM maintenance events in the system of FIGS. 1 & 2.
FIG. 4 is a timeline illustrating a time of service (ToS) window for scheduling DRAM maintenance events.
FIG. 5 is a block/flow diagram illustrating another embodiment of system for scheduling CPU threads A, B, and C and DRAM maintenance events according to a priority table.
FIG. 6 is a timeline illustrating an embodiment of a method for periodically performing the DRAM maintenance events in the system of FIG. 5 without scheduling via the kernel scheduler.
FIG. 7 is a timeline illustrating an embodiment of a method for scheduling the DRAM maintenance events according to the priority table.
FIG. 8 is a block/flow diagram illustrating another embodiment of a system for scheduling the DRAM maintenance events according to the priority table.
FIG. 9 is a flowchart illustrating an embodiment of a method for generating a priority table for scheduling DRAM maintenance events.
FIG. 10 illustrates an exemplary embodiment of a priority table for determining a priority for a DRAM maintenance event.
FIG. 11 is a timeline illustrating DRAM refresh events executed during a ToS window.
FIG. 12 is a timeline illustrating an embodiment of a hardware intervention method for performing DRAM refresh events after a ToS window has expired.
FIG. 13 is a block diagram of an embodiment of a portable computing device that may incorporate the systems and methods for scheduling DRAM maintenance events.
FIG. 14 is a block diagram of another embodiment of a system for scheduling volatile memory maintenance events in a multi-processor SoC.
FIG. 15 is a combined flow/block diagram illustrating an embodiment of the decision module in the DRAM controller of FIG. 14.
FIG. 16 is a flowchart illustrating an embodiment of method for scheduling DRAM maintenance events in the multi-processor SoC of FIG. 14.
FIG. 17 is a timeline illustrating an embodiment of a method for independently scheduling and controlling DRAM maintenance in the multi-processor SoC of FIG. 14.
FIG. 18 is a table illustrating an embodiment of the decision priority table of FIG. 15.
FIG. 19 is a data diagram illustrating an exemplary implementation of the notifications independently generated by each of the processors in FIG. 14.

### DETAILED DESCRIPTION

The word "exemplary" is used herein to mean "serving as an example, instance, or illustration." Any aspect described herein as "exemplary" is not necessarily to be construed as preferred or advantageous over other aspects.

In this description, the term "application" or "image" may also include files having executable content, such as: object code, scripts, byte code, markup language files, and patches. In addition, an "application" referred to herein, may also include files that are not executable in nature, such as documents that may need to be opened or other data files that need to be accessed.

The term "content" may also include files having executable content, such as: object code, scripts, byte code, markup language files, and patches. In addition, "content" referred to herein, may also include files that are not executable in nature, such as documents that may need to be opened or other data files that need to be accessed.

As used in this description, the terms "component," "database," "module," "system," and the like are intended to refer to a computer-related entity, either hardware, firmware, a combination of hardware and software, software, or software in execution. For example, a component may be, but is not limited to being, a process running on a processor, a processor, an object, an executable, a thread of execution, a program, and/or a computer. By way of illustration, both an application running on a computing device and the computing device may be a component. One or more components may reside within a process and/or thread of execution, and a component may be localized on one computer and/or distributed between two or more computers. In addition, these components may execute from various computer readable media having various data structures stored thereon. The components may communicate by way of local and/or remote processes such as in accordance with a signal having one or more data packets (*e.g*., data from one component interacting with another component in a local system, distributed system, and/or across a network such as the Internet with other systems by way of the signal).

In this description, the terms "communication device," "wireless device," "wireless telephone", "wireless communication device," and "wireless handset" are used interchangeably. With the advent of third generation ("3G") wireless technology and four generation ("4G"), greater bandwidth availability has enabled more portable computing devices with a greater variety of wireless capabilities. Therefore, a portable computing device may include a cellular telephone, a pager, a PDA, a smartphone, a navigation device, or a hand-held computer with a wireless connection or link.

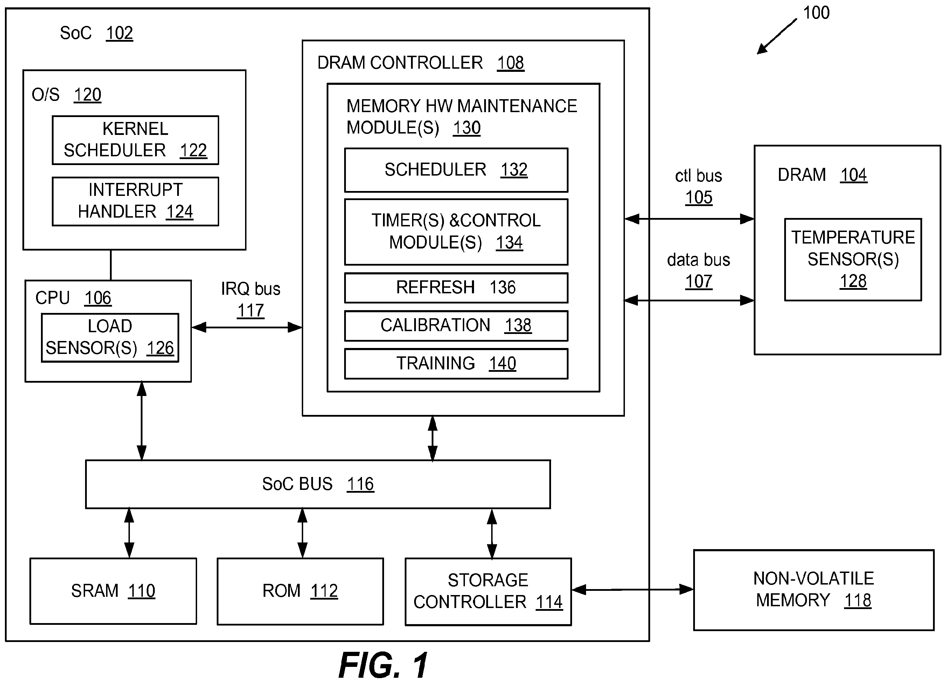

FIG. 1 illustrates an embodiment of a system 100 for providing kernel scheduling of volatile memory hardware maintenance events via a memory controller. The system 100 may be implemented in any computing device, including a personal computer, a workstation, a server, a portable computing device (PCD), such as a cellular telephone, a portable digital assistant (PDA), a portable game console, or a tablet computer. The system 100 comprises a system on chip (SoC) 102 electrically coupled to one or more memory devices. The memory devices may comprise volatile memory (*e.g*., dynamic random access memory (DRAM) 104) and non-volatile memory 118. DRAM 104 may be electrically coupled to the SoC 102 via a high-performance data bus 107 and a control bus 105.

SoC 102 comprises various on-chip or on-die components. In the embodiment of FIG. 1, SoC 102 comprises one or more processing devices (*e.g*., a central processing unit (CPU) 106, a graphics processing unit (GPU), a digital signal processor (DSP), *etc*.), a DRAM controller 108, static random access memory (SRAM) 110, read only memory (ROM) 112, and a storage controller 114 interconnected via a SoC bus 116. The storage controller 114 is coupled to the non-volatile memory 118 and controls associated memory transactions. It should be appreciated that the non-volatile memory 118 may comprise any non-volatile memory, such as, for example, flash memory, flash drive, a Secure Digital (SD) card, a solid-state drive (SSD), or other types. CPU 106 may comprise one or more sensors 126 for determining a current CPU processing load. DRAM 104 may comprise one or more temperature sensors 128 for determining the temperature of DRAM 104.

The DRAM controller 108 comprises various modules 130 for scheduling, controlling, and executing various DRAM hardware maintenance events. As described below in more detail, the DRAM controller 108 may implement various aspects of the DRAM hardware maintenance via signaling and communications with the CPU 106 and functionality provided by an operating system 120 (*e.g*., a kernel scheduler 122, an interrupt handler 124, *etc*.). In this regard, the memory hardware maintenance modules 130 may further comprise a scheduler module 132 for initiating the scheduling of DRAM maintenance events by generating and sending interrupt signals to CPU 106 via, for example, an interrupt request (IRQ) bus 117. The scheduler module 132 may incorporate a timer/control module 134 for defining time-of-service (ToS) windows for executing scheduled maintenance events. In an embodiment, the DRAM hardware maintenance events may comprise a refresh operation, a calibration operation, and a training operation, as known in the art. A refresh module 136 comprises the logic for refreshing the volatile memory of DRAM 104. A calibration module 138 comprises the logic for periodically calibrating voltage signal levels. A training module 140 comprises the logic for periodically adjusting timing parameters used during DRAM operations.

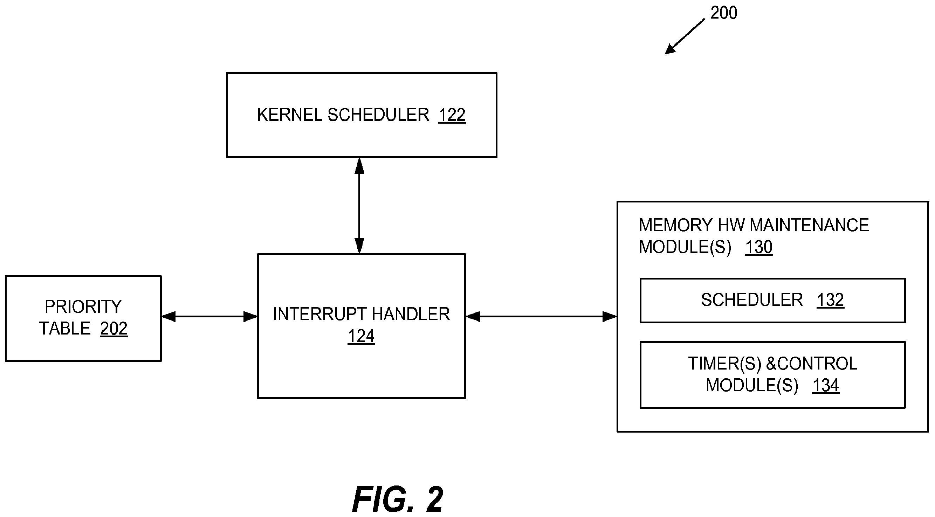

FIG. 2 illustrates an embodiment of the interaction between the various components used in scheduling, controlling, and executing DRAM hardware maintenance events. The scheduler 132 and the timer/control module(s) 134 (which reside in the DRAM controller 108) interface with the interrupt handler 124 of the operating system 120. The CPU 106 receives interrupt signals from the DRAM controller 108 indicating that a DRAM hardware maintenance event is to be scheduled by the kernel scheduler 122. Upon receiving the interrupt, the interrupt handler 124 running on the CPU 106 interfaces with a priority table 202, which may be used to assign a priority for the particular DRAM hardware maintenance event associated with the received interrupt signal. The interrupt handler 124 interfaces with the kernel scheduler 122 to schedule the DRAM hardware maintenance event according to the priority defined by the priority table 202. It should be appreciated that multiple interrupts with corresponding interrupt handlers may be used for servicing all of the different types of maintenance events.

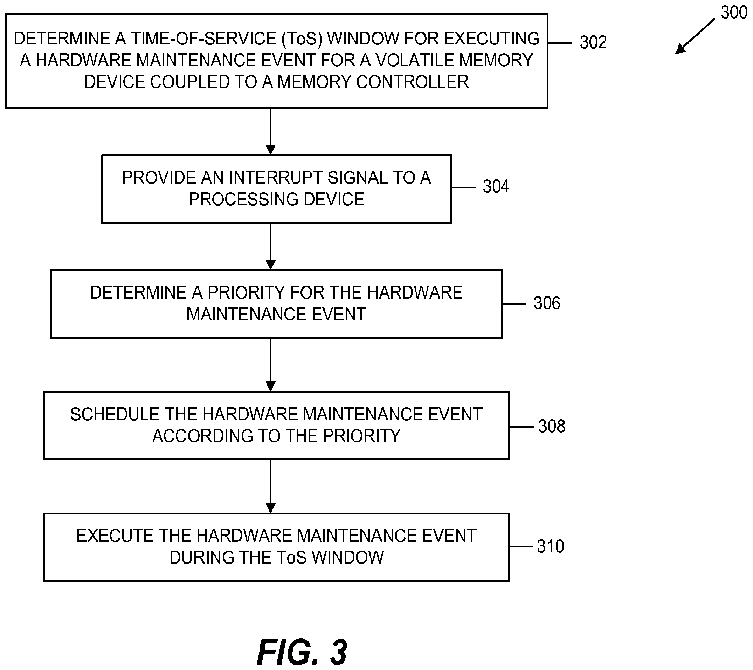

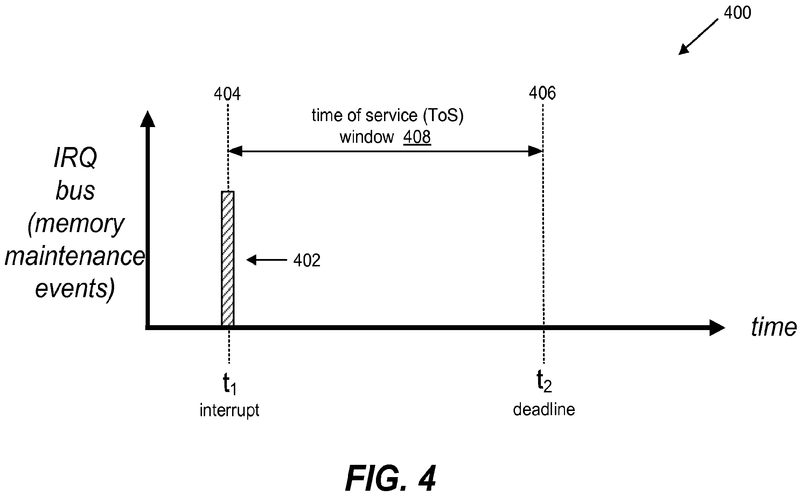

FIG. 3 illustrates a method 300 implemented by the system 100 for providing kernel scheduling of DRAM hardware maintenance events. At block 302, the DRAM controller 108 determines a time-of-service (ToS) window for scheduling, controlling, and executing one or more DRAM hardware maintenance events via the kernel scheduler 122. FIG. 4 illustrates a memory maintenance event timeline 400 illustrating an exemplary ToS window 408. The y-axis of the timeline 400 represents memory maintenance events over time (x-axis). In an embodiment, the ToS window 408 is defined as a duration of time between an interrupt signal 402 and a predetermined deadline by which the DRAM hardware maintenance event may be executed. As illustrated in FIG. 4, the interrupt signal 402 may be received at a time t₁ illustrated by reference line 404. The DRAM controller 108 may monitor the ToS window 408 via timer and control module 134 to determine whether a scheduled DRAM maintenance event has been completed by the deadline time t₂ illustrated by reference line 406.

Referring again to FIG. 3, at block 304, the DRAM controller 108 provides one or more interrupt signals 402 to CPU 106 indicating that one or more DRAM hardware maintenance events are to be executed during the ToS window 408. The interrupt handler 124 receives the interrupt signals 402. At block 306, in response to the interrupt signal(s) 402, the interrupt handler 124 may determine a priority for the one or more DRAM hardware maintenance events to be scheduled during the ToS window 408. It should be appreciated that the ToS window 408 represents an available service window during which one or more DRAM maintenance events may be optimally deferred to execute during CPU idle time, when CPU 106 has less load, allowing critical, high-priority tasks to be completed, or according to other priority schemes, any of which may be embodied in priority table 202. It should be further appreciated that DRAM maintenance events may be scheduled to execute during the ToS window 408 as a batch of maintenance events rather than as independent maintenance events as required by existing systems, for example, by issuing multiple refresh commands or by combining refresh and training events. In this manner, memory access collisions may be eliminated or significantly reduced and CPU process memory efficiency may be improved.

In an embodiment, the priority may be determined according to the priority table 202 based on, for example, one or more of a type of maintenance event (*e.g*., refresh, calibration, training, *etc*.), a current CPU load determined by load sensor(s) 126, and a current DRAM temperature determined by sensor(s) 128. At block 308, the one or more DRAM hardware maintenance events are inserted by the interrupt handler 124 as new threads onto the kernel scheduler's 122 input queues according to the priority determined during block 306. The kernel scheduler 122 may follow standard practices to fairly dispatch all of the activities in its queues based on priority. At block 310, the one or more DRAM hardware maintenance events may be executed via the kernel scheduler 122 according to the priority. As mentioned above, in an embodiment, the DRAM hardware maintenance events may be grouped together to form a single longer DRAM maintenance operation at an advantageous time within the ToS window 408. In the event that the ToS window 408 expires (*i.e*., deadline t₂ is reached) prior to a scheduled DRAM hardware maintenance event being performed, the timer & control module 134 may override kernel scheduling and perform hardware intervention by stalling traffic on the CPU 106 and performing the desired maintenance. If intervention occurs, the timer and control module 134 may maintain a log of past interventions which may be accessed by the CPU 106.

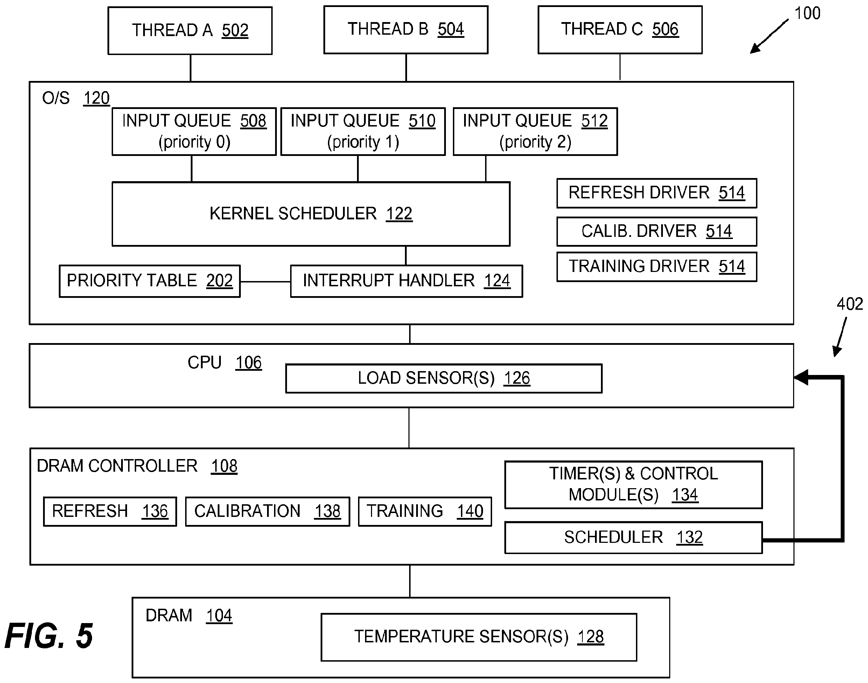

FIG. 5 illustrates another exemplary implementation of the system 100 involving the scheduling of DRAM refresh operations in relation to three processing threads (thread A 502, thread B 504, and thread C 506). As illustrated in FIG. 5, the operating system 120 may comprise one or more priority-based input queues for scheduling memory operations and DRAM hardware maintenance events. In this example, the system supports three priority levels. Input queue 508 is used for scheduling operations associated with a highest priority (priority 0). Input queue 510 is used for scheduling operations associated with a next highest priority (priority 1). Input queue 512 is used for scheduling operations associated with a lowest priority (priority 2). It should be appreciated that any number of priority levels, types, and schemes may be supported.

As described above, DRAM 104 may involve periodic hardware servicing events from refresh module 136, calibration module 138, and training module 140. In an embodiment, modules 136, 138, and 140 may comprise respective hardware for keeping track of periodic servicing intervals using timers provided by module 134. Each timer may track a ToS window 408 within which the corresponding DRAM hardware maintenance events (s) should be completed.

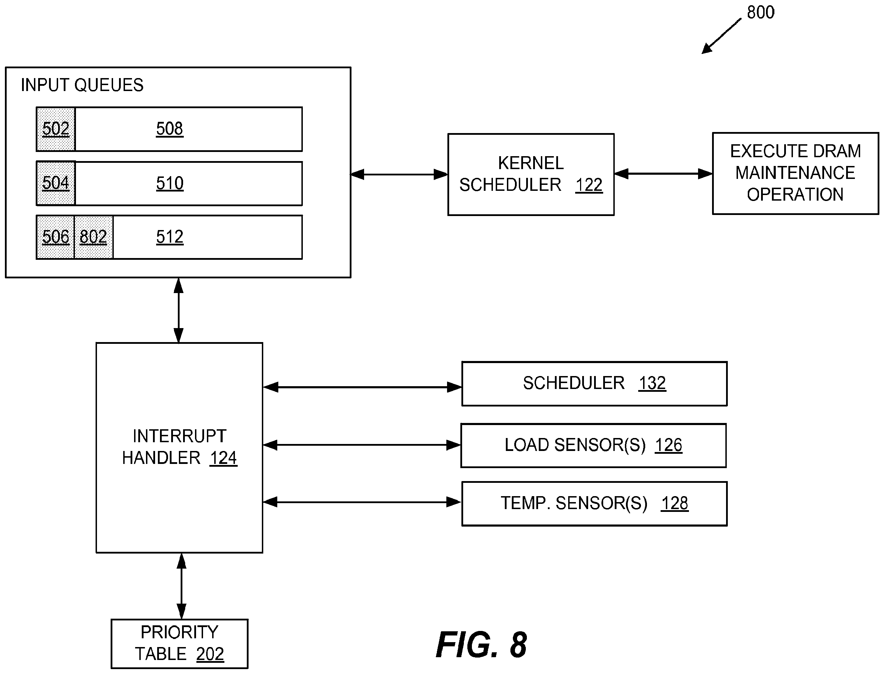

As a time-of-service for each event approaches, scheduler 132 may issue interrupt signals 402 to the CPU 106. It should be appreciated that an interrupt signal 402 may cause the interrupt handler 124 of the operating system 120 to add a corresponding event thread onto one of the input queues 508, 510, and 512 based upon the priority table 202. FIG. 8 illustrates an example in which the interrupt handler 124 receives an interrupt signal 402 for a refresh operation. The interrupt handler 124 may access the priority table 202 and determine that the refresh operation is to be assigned to the lowest priority (*i.e*., input queue 512 for priority 2 operations). The priority may be determined based on input from load sensor(s) 126 and/or temperature sensor(s) 128. In the example of FIG. 8, thread A 502 is added to input queue 508 as a priority 0 operation, thread B 504 is added to input queue 510 as a priority 1 operation, and thread C 506 is added to input queue 512 as a priority 2 operation. After the interrupt handler 124 determines that the refresh operation is to be assigned a priority 2 operation, a refresh thread 802 may be added to input queue 512 corresponding to priority 2 operations.

In accordance with the kernel scheduling algorithm, the kernel scheduler 122 may dispatch threads A, B, and C and the refresh thread 802. In an embodiment, the kernel scheduling algorithm may follow, for example, a static priority scheme, a prioritized round robin scheme, or a prioritized ping-pong scheme, which are well-known in the art. It should be appreciated that when the refresh thread 802 executes, a corresponding refresh driver 514 may be used to command the refresh module 136 in the DRAM controller 108 to perform the refresh event. Additional calibration and training drivers 514 may be used to command the calibration module 138 and the training module 140, respectively, to perform the corresponding DRAM maintenance event. It should be appreciated that, prior to servicing, each driver 514 may check the hardware to determine if hardware intervention has already occurred due to the ToS window 408 expiring prior to the event being executed.

As mentioned above, timers in module 134 may keep track of the deadline of when the servicing event should be completed. For example, under heavy CPU load, a DRAM maintenance event thread and associated driver 514 may not execute before the deadline. If this occurs, the DRAM controller 108 is aware of the deadlines tracked by timers, and hardware will immediately intervene, stall CPU traffic, and perform the required DRAM servicing. After intervention, the hardware may continue as previously described.

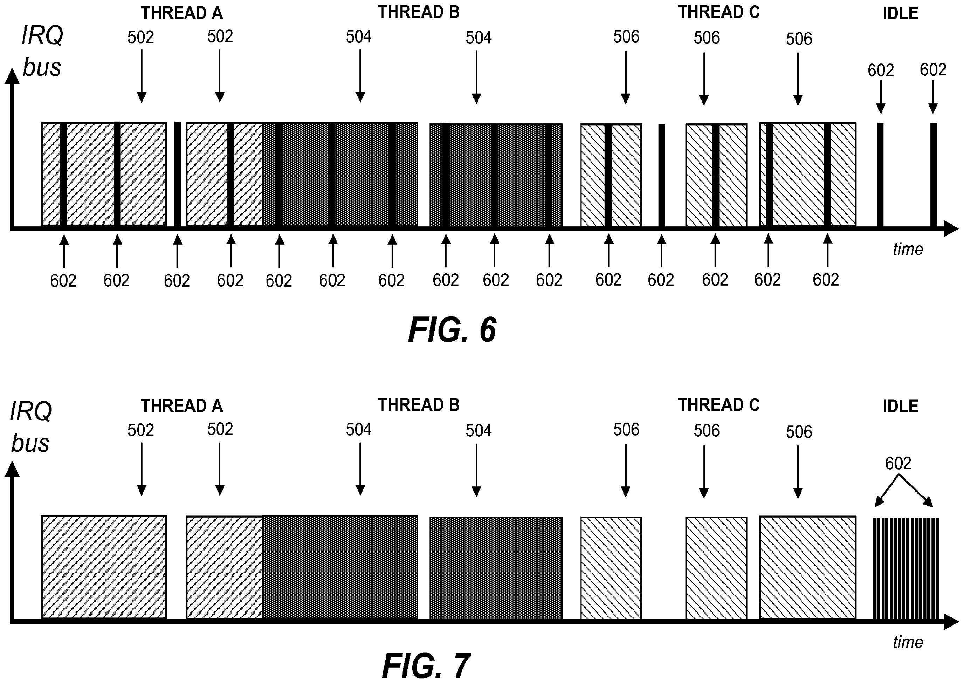

FIG. 6 is a memory traffic timeline illustrating an embodiment of a conventional method for periodically refreshing DRAM 104 in the example of FIG. 5 without the DRAM controller 108 scheduling via the kernel scheduler 122. It should be appreciated that this example illustrates a conventional approach to periodically scheduling refresh operations, as independent service events, without regard to kernel scheduling, priority, *etc.* As illustrated in FIG. 6, individual refreshes 602 occur at a constant period rather than being scheduled by the DRAM controller 108 via the kernel scheduler 122. Therefore, when processing thread A 502, thread B 504, and thread C 506, each refresh 602 requires that the corresponding thread be stalled to enable the refresh operation to be performed. FIG. 7 illustrates the example of FIG. 6 in which the systems and methods described above are used to schedule the group of refreshes 602. FIG. 7 illustrates that each memory access collision may be avoided by scheduling the refreshes 602 to be performed during an idle time and, thereby, improving CPU process memory efficiency.

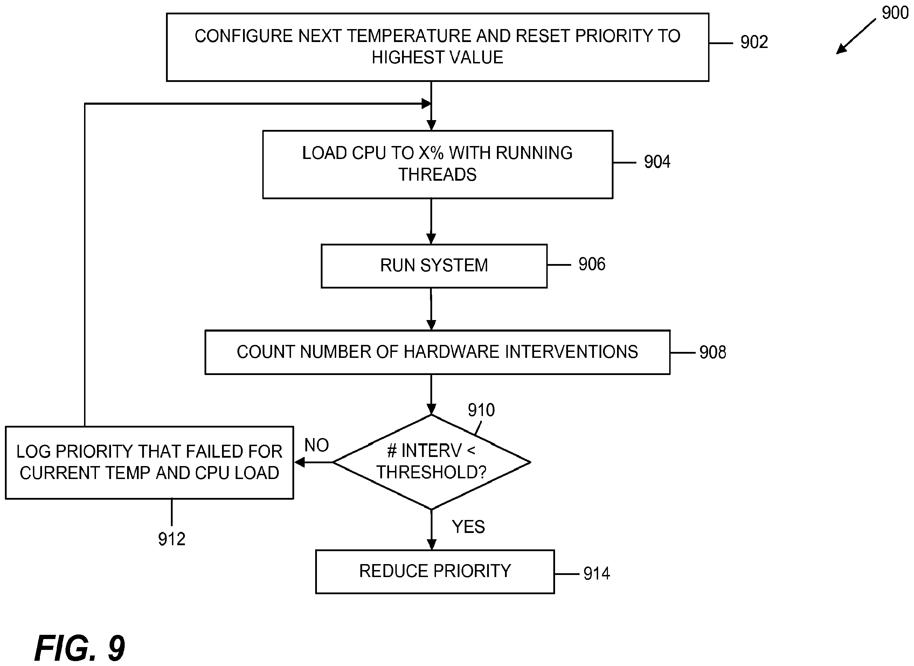

FIG. 9 is a flowchart illustrating an embodiment of a priority calibration method 900 for generating the priority table 202. One of ordinary skill in the art will appreciate that certain values used in the method 900 may be adjusted to accommodate different platforms, memory types, software builds, *etc.* It should be further appreciated that the values may be provided by an original equipment manufacturer (OEM).

As illustrated at block 902, the priority calibration may be performed across various temperature values. At block 904, the priority calibration may be performed across various values of CPU loading (*e.g*., percentage values, ranges, *etc*.). During the sweep across values, the thread priority of the calibration, training, and refresh hardware events may be reduced. It should be appreciated that this corresponds to increasing an integer value priority from 0 and up until the number of hardware interventions (when the scheduling fails to complete within the ToS window) exceeds a threshold. At that point, the priority may be logged (block 912) for that temperature value (T) and CPU load value (X), after which flow may be returned to block 904. Referring to FIG. 9, block 906 indicates that the system may be run for a fixed period of time to count hardware interventions (block 908). At decision block 910, if the number of hardware interventions is less than the threshold, the priority may be reduced. If the number of hardware interventions exceeds the threshold, block 912 is performed.

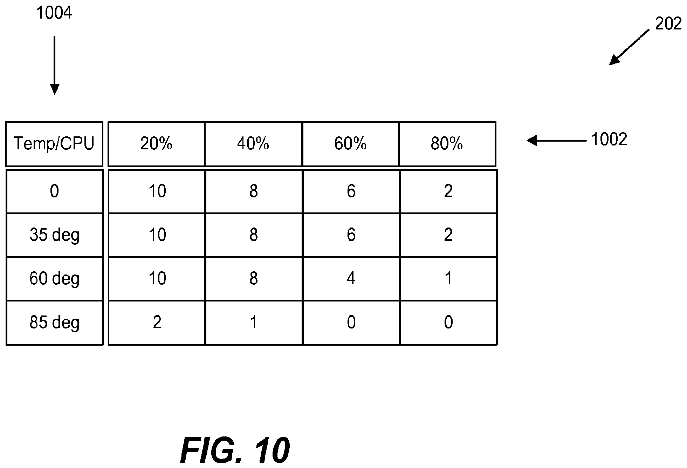

FIG. 10 illustrates an exemplary priority table 202 comprising priority values for combinations of temperature values (column 1004) and CPU percentage loads (row 1002). For example, the priority value for a temperature value of 85 degrees and a CPU load of 80% may be assigned the highest priority level (priority = 0) because of heavy CPU load and high DRAM temperatures.

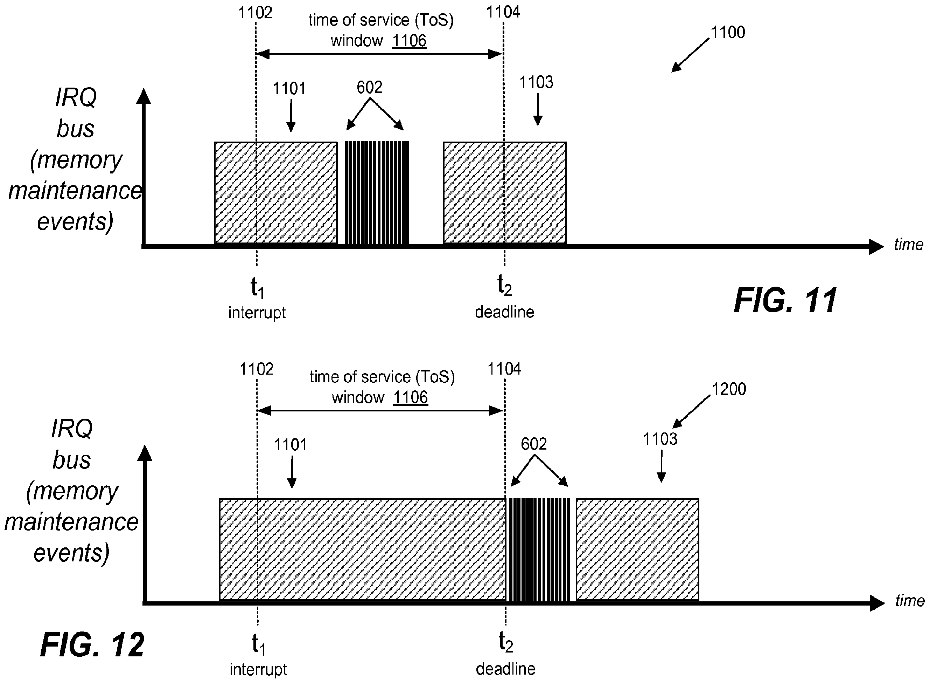

As mentioned above, the DRAM controller 108 may monitor a ToS window 408 via timer and control module 134 to determine whether a scheduled DRAM maintenance event has been completed by the corresponding deadline. FIG. 11 is a timeline 1100 illustrating a group of refreshes 602 being successfully scheduled and executed during a ToS window 1106 in an idle time between execution of threads 1101 and 1103. FIG. 12 illustrates a timeline 1200 when the ToS window 1106 expires while the thread 1101 is executing and before the group of refreshes 602 may be performed. In this situation, the DRAM controller 108 detects that the deadline is missed and initiates hardware intervention as described above. A running history of interventions for each type of maintenance event may be logged by a counter, which can be read and/or restarted by the operating system 120 running on the CPU 106. The operating system 120 may periodically read and clear this intervention history and store a log of previous readings into non-volatile memory 118. This allows the operating system 120 to measure the number of interventions that have occurred over fixed consecutive periods of time, for example, equal in duration as in block 908 in FIG. 9. The log stored in non-volatile memory 118 may be used by the operating system 120 to ensure that the system 100 remains in acceptable calibration and that the occurrences of intervention have not significantly worsened. For example, if the log shows that the system 100 has degraded and has encountered interventions that exceed the value of the calibration threshold described in block 910 in FIG. 9, then the system may intentionally adjust the priority table 202 by immediately increasing the priority for every table entry (not including priority 0 which already is the highest), thereby reducing the intervention rate. Conversely, if the log reports that during an extended period of time (*e.g*., 48 hours, which is exceptionally longer than the period of time used in the exemplary embodiment of block 908 in FIG. 9) the system 100 is experiencing zero or near-zero interventions, this may indicate that the priority table 202 entries have been prioritized higher than necessary, and the system 100 may include the capability to reduce priority for each entry, thereby causing the intervention rate to rise.

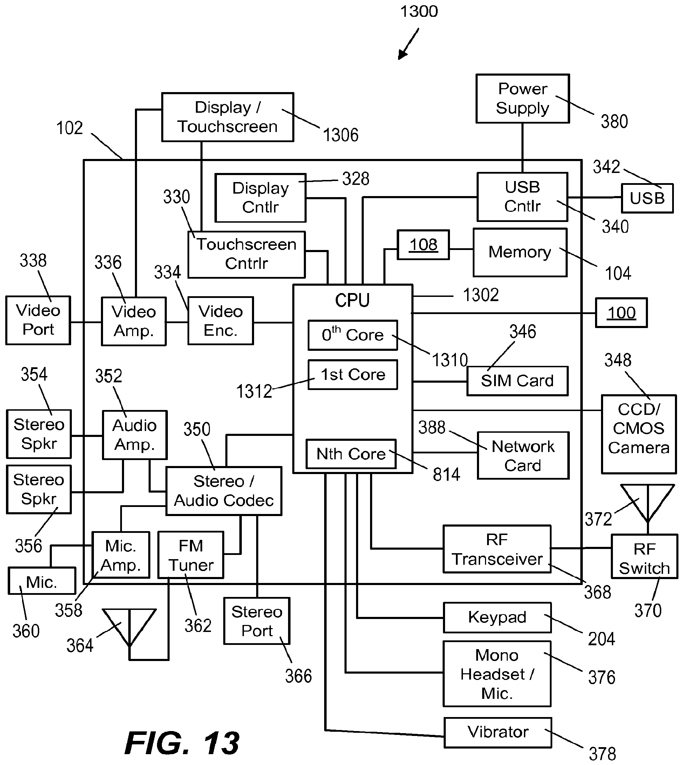

As mentioned above, the system 100 may be incorporated into any desirable computing system. FIG. 13 illustrates an exemplary portable computing device (PCD) 1300 comprising SoC 102. In this embodiment, the SoC 102 includes a multicore CPU 1302. The multicore CPU 1302 may include a zeroth core 1310, a first core 1312, and an Nth core 1314. One of the cores may comprise, for example, a graphics processing unit (GPU) with one or more of the others comprising the CPU.

A display controller 328 and a touch screen controller 330 may be coupled to the CPU 1302. In turn, the touch screen display 1306 external to the SoC 102 may be coupled to the display controller 328 and the touch screen controller 330.

FIG. 13 further shows that a video encoder 334, e.g., a phase alternating line (PAL) encoder, a sequential color a memoire (SECAM) encoder, or a national television system(s) committee (NTSC) encoder, is coupled to the multicore CPU 1302. Further, a video amplifier 336 is coupled to the video encoder 334 and the touch screen display 1306. Also, a video port 338 is coupled to the video amplifier 336. As shown in FIG. 13, a universal serial bus (USB) controller 340 is coupled to the multicore CPU 1302. Also, a USB port 342 is coupled to the USB controller 340. DRAM 104 and a subscriber identity module (SIM) card 346 may also be coupled to the multicore CPU 1302.

Further, as shown in FIG. 13, a digital camera 348 may be coupled to the multicore CPU 1302. In an exemplary aspect, the digital camera 348 is a charge-coupled device (CCD) camera or a complementary metal-oxide semiconductor (CMOS) camera.

As further illustrated in FIG. 13, a stereo audio coder-decoder (CODEC) 350 may be coupled to the multicore CPU 1302. Moreover, an audio amplifier 352 may be coupled to the stereo audio CODEC 350. In an exemplary aspect, a first stereo speaker 354 and a second stereo speaker 356 are coupled to the audio amplifier 352. FIG. 13 shows that a microphone amplifier 358 may be also coupled to the stereo audio CODEC 350. Additionally, a microphone 360 may be coupled to the microphone amplifier 358. In a particular aspect, a frequency modulation (FM) radio tuner 362 may be coupled to the stereo audio CODEC 350. Also, an FM antenna 364 is coupled to the FM radio tuner 362. Further, stereo headphones 366 may be coupled to the stereo audio CODEC 350.

FIG. 13 further illustrates that a radio frequency (RF) transceiver 368 may be coupled to the multicore CPU 1302. An RF switch 370 may be coupled to the RF transceiver 368 and an RF antenna 372. A keypad 204 may be coupled to the multicore CPU 602. Also, a mono headset with a microphone 376 may be coupled to the multicore CPU 1302. Further, a vibrator device 378 may be coupled to the multicore CPU 1302.

FIG. 13 also shows that a power supply 380 may be coupled to the SoC 102 and SoC 202. In a particular aspect, the power supply 380 is a direct current (DC) power supply that provides power to the various components of the PCD 1300 that require power. Further, in a particular aspect, the power supply is a rechargeable DC battery or a DC power supply that is derived from an alternating current (AC) to DC transformer that is connected to an AC power source.

FIG. 13 further indicates that the PCD 1300 may also include a network card 388 that may be used to access a data network, e.g., a local area network, a personal area network, or any other network. The network card 388 may be a Bluetooth network card, a WiFi network card, a personal area network (PAN) card, a personal area network ultra-low-powcr technology (PcANUT) network card, a television/cable/satellite tuner, or any other network card well known in the art. Further, the network card 388 may be incorporated into a chip, i.e., the network card 388 may be a full solution in a chip, and may not be a separate network card 388.

Referring to FIG. 13 it should be appreciated that the memory 104, touch screen display 1306, the video port 338, the USB port 342, the camera 348, the first stereo speaker 354, the second stereo speaker 356, the microphone 360, the FM antenna 364, the stereo headphones 366, the RF switch 370, the RF antenna 372, the keypad 204, the mono headset 376, the vibrator 378, and the power supply 380 may be external to the on-chip system 102.

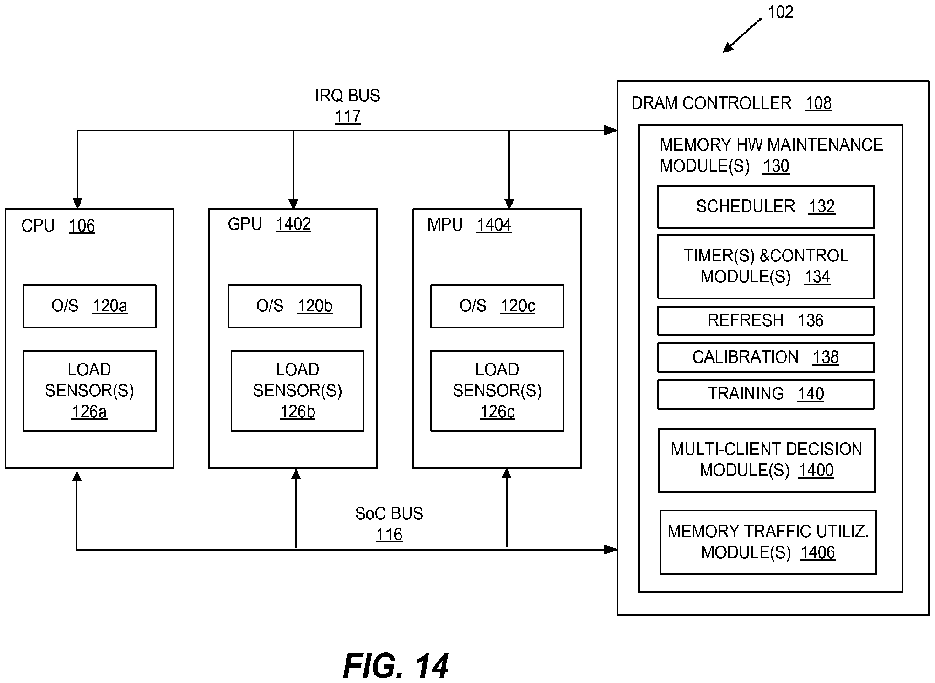

It should be appreciated that the systems and methods described above for scheduling volatile memory maintenance events may be incorporated in a multi-processor SoC comprising two or more independent memory clients that share the same volatile memory. FIG. 14 illustrates an embodiment in which the SoC 102 of FIG. 1 comprises three memory clients: a CPU 106, a graphics processing unit (GPU) 1402, and a modem processing unit (MPU) 1404. Each processor runs autonomously and independently of one another but are able to communicate with each other and to ROM 112, SRAM 110, DRAM controller 108, and storage controller 114 via the SoC bus 116. As described above and illustrated in FIG. 14, CPU 106, GPU 1402, and MPU 1404 may register to be included by the multi-client decision module 1400 and to receive interrupt signals from the DRAM controller 108 via IRQ bus 117.

Any number of additional processors and/or processor types may be incorporated into SoC 102. Each processor type may comprise singular and/multiple parallel execution units, which execute threads under the command of a kernel and scheduling function (e.g., kernel scheduler 122, interrupt handler 124 - FIG. 1) running on their respective processor type. As further illustrated in FIG. 14, CPU 106, GPU 1402, and MPU 1404 may comprise operating system 120a, 120b, and 120c, respectively, with corresponding load sensor(s) 126a, 126b, and 126c. The kernel scheduling systems and methods described above in connection with FIGS. 1 - 13 may be extended for each of CPU 106, GPU 1402, and MPU 1404.

As described below in more detail, the DRAM controller 108 may further comprise multi-client decision module(s) 1400 comprising the logic for determining when to schedule a DRAM maintenance event by taking into account the kernel scheduling of each of the SoC processors. Kernel scheduling may be performed in the manner described above. In the multi-proccssor environment of FIG. 14, as the ToS approaches, the timers and control module 134 may issue one or more interrupts to each of CPU 106, GPU 1402, and MPU 1404. In response, the interrupt service routine (ISR) within each operating system 120a, 120b, and 120c may issue a corresponding event onto their respective scheduler input queue. In this regard, the event may be duplicated and queued for each processor type. Processors that are inactive or in a sleep state may be temporarily excluded from responding to interrupts and excluded from the multi-client decision module's 1400 processing until they become active again. Any processor may exclude itself at any time from multi-client decisions. Each processor may do this by, for example, performing a write to the multi-client decision module 1400 signifying that this processor should no longer be included in the multi-client decision, in addition to masking maintenance event interrupts 117 from the processor's interrupt handler 124.

CPU 106, GPU 1402, and MPU 1404 independently run and schedule DRAM maintenance events by generating and providing separate schedule notifications to the DRAM controller 108. In an embodiment, each processor kernel scheduler determines their own "best time for maintenance" and then independently schedules notifications with the DRAM controller 108 having the final authority to decide the actual scheduling based on the received schedule notifications from each processor. It should be appreciated that the DRAM controller 108 may receive the schedule notifications in random order, not following any consistent pattern. The multi-client decision module 1400 may make use of stored characterization data as well as DRAM traffic utilization data to determine when to execute the DRAM maintenance events. Memory traffic utilization modules 1406 (FIG. 14) may determine and report the current level of traffic activity on DRAM 104. In this manner, the kernel scheduler for each SoC processor may individually determine an optimal time to perform a DRAM maintenance event, but the multi-client decision module 1400 makes the final decision of when to do it.

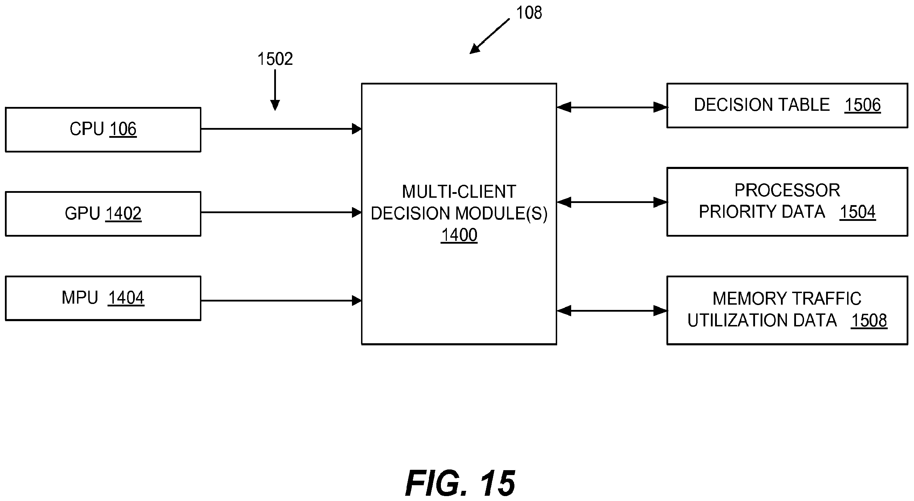

FIG. 15 illustrates the general operation and data inputs of an embodiment of the multi-client decision module 1400. CPU 106, GPU 1402, and MPU 1404 individually notify the multi-client decision module 1400 of the optimal time to perform the DRAM maintenance event by providing a notification 1502. The notifications 1502 may be implemented via a write operation to the DRAM controller 108.

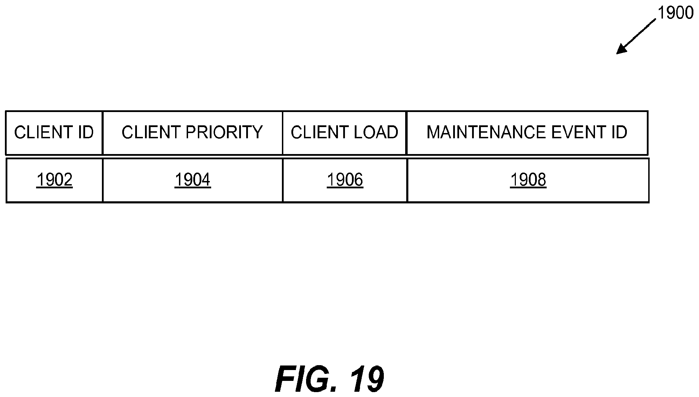

FIG. 19 illustrates an exemplary implementation of a write operation 1900 comprising a client ID 1902, client priority data 1904, client load data 1906, and a maintenance event ID 1908. Client ID 1902 may be used to identify which processor is sending the notification 1502. Client priority data 1904 may comprise a priority assigned to the processor. In an embodiment, each processor type (e.g., CPU, GPU, MPU, etc.) may be assigned a priority according to a predefined priority scheme. The priority of the processor is inverse to sensitivity to DRAM access latency. In other words, processors that are relatively more sensitive to latency may be assigned a higher priority. In the example of FIG. 14, the MPU 1404 may be assigned a "highest priority", the GPU 1402 a "lowest priority", and the CPU a "medium priority". As illustrated in FIG. 15, the priority data may not be provided with the notification. In alternative embodiments, processor priority data 1502 may be stored or otherwise provided to the DRAM controller 108. Referring again to FIG. 19, the client load data 1906 provided via the write operation 1900 may comprise, for example, an average load (i.e., processor utilization) seen by the processor. The processor utilization may be measured by the load sensor(s) 126. The maintenance event ID 1908 may comprise an event type identifying the type of DRAM maintenance event being scheduled (e.g., refresh, training, calibration). In an embodiment, the maintenance event ID 1908 may also be used to send configuration and status information from the processor to the multi-client decision module 1400. For example, standalone client load data 1906 may be periodically sent by each processor, or an exclusion request may be sent from the processor to be temporarily removed from multi-client decisions.

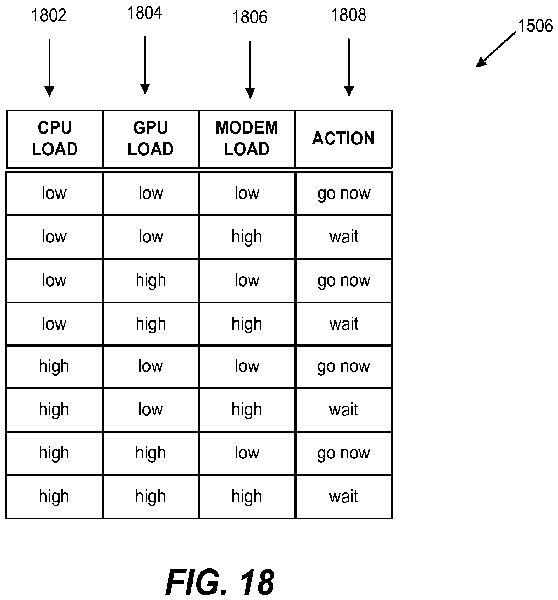

Referring again to FIG. 15, the multi-client decision module 1400 may be configured to determine when to execute the DRAM maintenance event according to one or more decision rules. In an embodiment, the decision rules are applied on a notification-by-notification basis. In other words, as each notification 1502 is received, the decision rules are applied to that notification. The multi-client decision module 1400 may apply the decision rules using various types of data. In the embodiment of FIG. 15, the input data comprises a decision table 1506, processor priority data 1504, and memory traffic utilization data 1508. An exemplary decision table 1506 is described below with reference to FIG. 18. The memory traffic utilization data 1508 may be provided by modules 1406 (FIG. 14).

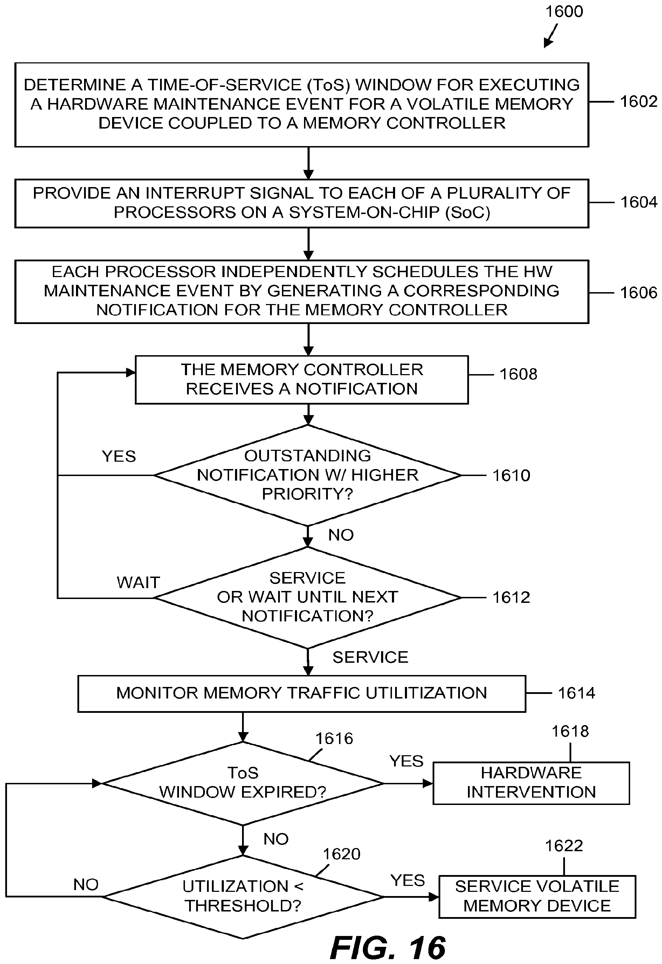

FIG. 16 is a flowchart illustrating an embodiment of a rules-based method 1600 for scheduling DRAM maintenance events in the multi-processor SoC of FIG. 14. At block 1602, the DRAM controller 108 may determine the ToS window for executing the DRAM maintenance event. At block 1604, the DRAM controller 108 provides an interrupt signal to each of a plurality of processors on the SoC 102. At block 1606, each processor independently schedules the DRAM maintenance event by generating a corresponding notification 1502. Blocks 1602, 1604, and 1606 may operate in the manner described above.

As each notification 1502 is received by the DRAM controller 108 (block 1608), the multi-client decision module 1400 may apply one or more decision rules to determine when to execute the DRAM maintenance event. Multi-client decision module 1400 may keep track of which processor(s) have sent a notification for the current ToS window. At decision block 1610, the multi-clicnt decision module 1400 may determine whether there are any outstanding notifications 1502 with a higher priority than the priority of the current notification. If there are outstanding notification(s) with a higher priority than the current notification, the multi-client decision module 1400 may wait for the arrival of the next notification 1502 (returning control to block 1608). For example, consider that a current notification 1502 was received from the GPU 1402, which has a "lowest priority". If notifications have not yet been received from the CPU 106 or the MPU 1404 (both of which have a higher priority), the DRAM controller 108 may wait to receive a next notification. If there are not any outstanding notifications with a higher priority than the current notification, control passes to decision block 1612. At decision block 1612, the multi-client decision module 1400 determines whether to "go now" and service the DRAM maintenance event or wait to receive further notifications from one or more processors. If the highest priority processor is the last to respond with a notification, this means there are no outstanding notifications and the rules-based method 1600 may automatically advance to block 1614.

In an embodiment, decision block 1612 may be implemented by accessing the decision table 1506 (FIG. 15). FIG. 18 illustrates an exemplary decision table 1506, which specifies a "go now" or a "wait" action (column 1808) based on various combinations of the CPU load (column 1802), the GPU load (column 1804), and the MPU load (column 1806). In the example of FIG. 18, the processor loads are specified according to a "low" or "high" value, although numerical ranges or other values may be implemented. The processor load values 1802,1804, and 1806 may be retained until the next value update via the write operation 1900 overwrites the present value. Processor load value updates may be sent periodically for the purpose of providing accurate load information to the multi-client decision module 1400 even during the absence of any DRAM maintenance events.

Referring again to FIG. 16, if the decision table 1506 indicates a "wait" action, control returns to block 1608. If the decision table 1506 indicates a "go now" action, the DRAM controller 108 may begin monitoring the DRAM traffic utilization (block 1614). The DRAM controller 108 may begin servicing the DRAM event (block 1622) when the DRAM traffic utilization falls below a predetermined or programmable threshold (decision block 1620). While monitoring the DRAM traffic utilization, the DRAM controller 108 may keep track of whether the ToS window has expired (decision block 1616). If the ToS window expires before servicing the DRAM maintenance event, the DRAM controller may perform hardware intervention (block 1618) in the manner described above.

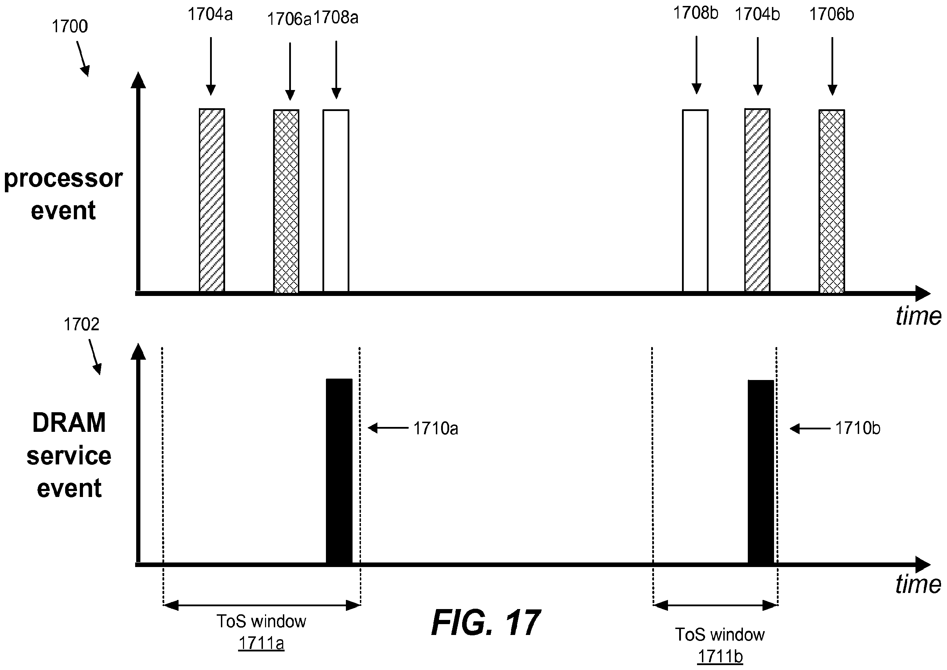

FIG. 17 is a timeline illustrating two examples of the operation of the rules-based method 1600. Timeline 1700 illustrates the order of notifications 1502 received by the DRAM controller 108, and timeline 1702 illustrates the resulting timing for servicing the DRAM maintenance event. Referring to timeline 1700, a first notification 1704a is received from the CPU 106 ("medium priority"). Because notifications have not yet been received from the higher priority processors (i.e., GPU 1402 and MPU 1404), the DRAM controller 108 waits for the next notification. A second notification 1706a is received from the GPU 1402 ("lowest priority"). Because the highest priority processor (MPU 1404) remains outstanding, the DRAM controller waits to receive the final notification (1708a) before checking the traffic utilization module 1406 and servicing the DRAM maintenance event within the ToS window 1711a. Timeline 1702 illustrates a signal 1710a being generated when the final notification 1708a is received.

At a later time, a second DRAM maintenance event may be scheduled. For this DRAM maintenance event, the notifications are received in a different order. The first notification 1708a is received from the MPU, which has the "highest priority". In response to receiving notification 1708a, the DRAM controller 108 may determine that there are not any outstanding notifications with a higher priority. In response, the multi-client decision module 1400 may access the decision table 1506 to determine whether to begin servicing the DRAM ("go now" action) or wait until the next notification ("wait" action). In this example, the MPU 1404 has a "high" load (second row in FIG. 18), and the multi-client decision module 1400 determines that the corresponding action is "wait". Based on the decision table 1506, the DRAM controller 108 waits to receive the next notification 1704b from the CPU 106 ("medium priority"). Because the outstanding notification associated with GPU 1402 is not a higher priority, the multi-client decision module 1400 may access the decision table 1506 to determine whether to begin servicing the DRAM (*e.g*., a "go now" action) or wait until the next notification (*e.g*., a "wait" action). In this example, the CPU's 106 write operation 1900 indicates a "high" load. Further, the MPU 104 has done a separate write operation 1900 that updated its load from a "high" to a "low" value, and the multi-client decision module 1400 determines that the corresponding action (*e.g*., the third row in FIG. 18) is to "go now". The traffic utilization module 1406 may be checked for memory traffic below a threshold as described in block 1620 in FIG. 16, and then the DRAM controller begins servicing the DRAM maintenance event. Timeline 1702 illustrates a signal 1710b being generated when the notification 1704b is received and before receiving the notification 1706b from the lowest priority processor (i.e., GPU 1402). GPU 1402 notification 1706b may still occur but may be ignored by the multi-client decision module 1400 because DRAM maintenance has already been completed for the present ToS window 1711b. For example, as illustrated in FIG. 17, the ToS window 1711b may be closed when signal 1710b is issued.

It should be appreciated that one or more of the method steps described herein may be stored in the memory as computer program instructions, such as the modules described above. These instructions may be executed by any suitable processor in combination or in concert with the corresponding module to perform the methods described herein.

Certain steps in the processes or process flows described in this specification naturally precede others for the invention to function as described. However, the invention is not limited to the order of the steps described if such order or sequence does not alter the functionality of the invention. That is, it is recognized that some steps may performed before, after, or parallel (substantially simultaneously with) other steps without departing from the scope and spirit of the invention. In some instances, certain steps may be omitted or not performed without departing from the invention. Further, words such as "thereafter", "then", "next", etc. are not intended to limit the order of the steps. These words are simply used to guide the reader through the description of the exemplary method.

Additionally, one of ordinary skill in programming is able to write computer code or identify appropriate hardware and/or circuits to implement the disclosed invention without difficulty based on the flow charts and associated description in this specification, for example.

Therefore, disclosure of a particular set of program code instructions or detailed hardware devices is not considered necessary for an adequate understanding of how to make and use the invention. The inventive functionality of the claimed computer implemented processes is explained in more detail in the above description and in conjunction with the Figures which may illustrate various process flows.

In one or more exemplary aspects, the functions described may be implemented in hardware, software, firmware, or any combination thereof. If implemented in software, the functions may be stored on or transmitted as one or more instructions or code on a computer-readable medium. Computer-readable media include both computer storage media and communication media including any medium that facilitates transfer of a computer program from one place to another. A storage media may be any available media that may be accessed by a computer. By way of example, and not limitation, such computer-readable media may comprise RAM, ROM, EEPROM, NAND flash, NOR flash, M-RAM, P-RAM, R-RAM, CD-ROM or other optical disk storage, magnetic disk storage or other magnetic storage devices, or any other medium that may be used to carry or store desired program code in the form of instructions or data structures and that may be accessed by a computer.

Also, any connection is properly termed a computer-readable medium. For example, if the software is transmitted from a website, server, or other remote source using a coaxial cable, fiber optic cable, twisted pair, digital subscriber line ("DSL"), or wireless technologies such as infrared, radio, and microwave, then the coaxial cable, fiber optic cable, twisted pair, DSL, or wireless technologies such as infrared, radio, and microwave are included in the definition of medium.

Disk and disc, as used herein, includes compact disc ("CD"), laser disc, optical disc, digital versatile disc ("DVD"), floppy disk and blu-ray disc where disks usually reproduce data magnetically, while discs reproduce data optically with lasers. Combinations of the above should also be included within the scope of computer-readable media.

## Claims

1. A method for scheduling volatile memory maintenance events, the method comprising:
a memory controller determining (302) a time-of-service, ToS, window for executing a maintenance event for a volatile memory device coupled to the memory controller via a memory data interface;
the memory controller providing (304) an interrupt signal to a processing unit, such that an interrupt handler of an operating system running on the processing unit receives the interrupt signal;
determining (306) with the interrupt handler a priority for the maintenance event; and
scheduling (308) the maintenance event by inserting with the interrupt handler a new thread for the maintenance event onto an input queue of a scheduler of the operating system according to the priority.

2. The method of claim 1, further comprising:
executing the maintenance event for the volatile memory device during the ToS window.

3. The method of claim 1, further comprising:
determining that the ToS window has expired without executing the maintenance event;
stalling traffic on the processing unit; and
executing the maintenance event for the volatile memory device.

4. The method of claim 1, wherein the maintenance event comprises one or more of a refresh operation, a calibration operation, and a training operation for periodically servicing the volatile memory device.

5. The method of claim 1, wherein the volatile memory device comprises a dynamic random access memory, DRAM, device.

6. The method of claim 1, wherein the determining the priority for the maintenance event comprises accessing a look-up table with the interrupt handler of the operating system and selecting the priority with the interrupt handler based on one or more of a type of maintenance event, a current load associated with the processing unit, and a current temperature associated with the volatile memory device.

7. The method of claim 1, wherein the scheduling the maintenance event comprises adding a service thread to the input queue of a kernel scheduler of the operating system.

8. A system for scheduling volatile memory maintenance events, the system comprising:
means for determining (302) a time-of-service, ToS, window for executing a maintenance event for a volatile memory device coupled to a memory controller via a memory data interface;
means for providing (304) an interrupt signal to a processing unit, such that an interrupt handler of an operating system running on the processing unit receives the interrupt signal;
means for determining (306) with the interrupt handler a priority for the maintenance event; and
means for scheduling (308) the maintenance event onto an input queue of a scheduler of the operating system according to the priority.

9. The system of claim 8, further comprising:
means for executing the maintenance event for the volatile memory device during the ToS window.

10. The system of claim 8, further comprising:
means for determining that the ToS window has expired without executing the maintenance event;
means for stalling traffic on the processing unit; and
means for executing the maintenance event for the volatile memory device.

11. The system of claim 8, wherein the maintenance event comprises one or more of a refresh operation, a calibration operation, and a training operation for periodically servicing the volatile memory device.

12. The system of claim 8, wherein the volatile memory device comprises a dynamic random access memory, DRAM, device.

13. The system of claim 8, wherein the means for determining the priority for the maintenance event comprises:
means for accessing a look-up table with the interrupt handler of the operating system and selecting the priority based on one or more of a type of maintenance event, a current load associated with the processing unit, and a current temperature associated with the volatile memory device.

14. The system of claim 8, wherein the means for scheduling the maintenance event comprises:
means for adding a service thread to the input queue of a kernel scheduler of the operating system.

15. A computer program comprising instructions to cause at least one computer to perform the steps according to any of claims 1-7.

## Patentansprüche

1. Verfahren zum Planen von Wartungsereignissen für einen flüchtigen Speicher, wobei das Verfahren umfasst:
einen Speichercontroller, der ein Dienstzeit-, ToS, Fenster zum Ausführen eines Wartungsereignisses für eine flüchtige Speichervorrichtung bestimmt (302), die mit dem Speichercontroller über eine Speicherdatenschnittstelle gekoppelt ist;
wobei der Speichercontroller ein Interrupt-Signal an eine Verarbeitungseinheit liefert (304), so dass ein Interrupt-Handler eines Betriebssystems, das auf der Verarbeitungseinheit läuft, das Interrupt-Signal empfängt;
Bestimmen (306) einer Priorität für das Wartungsereignis mit dem Interrupt-Handler; und
Planen (308) des Wartungsereignisses durch Einfügen eines neuen Threads für das Wartungsereignis mit dem Interrupt-Handler in eine Eingangswarteschlange eines Schedulers des Betriebssystems gemäß der Priorität.

2. Verfahren nach Anspruch 1, ferner umfassend:
Ausführen des Wartungsereignisses für die flüchtige Speichervorrichtung während des ToS Fensters.

3. Verfahren nach Anspruch 1, ferner umfassend:
Ermitteln, dass das ToS-Fenster abgelaufen ist, ohne das Wartungsereignis auszuführen;
Blockieren eines Verkehrs auf der Verarbeitungseinheit; und
Ausführen des Wartungsereignisses für die flüchtige Speichervorrichtung.

4. Verfahren nach Anspruch 1, wobei das Wartungsereignis eine oder mehrere von einer Auffrischungsoperation, einer Kalibrierungsoperation und einer Trainingsoperation zum periodischen Warten der flüchtigen Speichervorrichtung umfasst.

5. Verfahren nach Anspruch 1, wobei die flüchtige Speichervorrichtung einen dynamischen Speicher mit wahlfreiem Zugriff, DRAM, aufweist.

6. Verfahren nach Anspruch 1, wobei das Bestimmen der Priorität für das Wartungsereignis Zugreifen auf eine Nachschlagetabelle mit dem Interrupt-Handler des Betriebssystems umfasst und Auswählen der Priorität mit dem Interrupt-Handler basierend auf einem oder mehreren von einer Art von einem Wartungsereignis, einer aktuellen Last, die der Verarbeitungseinheit zugeordnet ist, und einer aktuellen Temperatur, die der flüchtigen Speichervorrichtung zugeordnet ist.

7. Verfahren nach Anspruch 1, wobei das Planen des Wartungsereignisses Hinzufügen eines Wartungs-Threads zu der Eingangswarteschlange eines Kernel-Schedulers des Betriebssystems umfasst.

8. System zum Planen von Wartungsereignissen für einen flüchtigen Speicher, wobei das System umfasst:
Mittel zum Bestimmen (302) eines Dienstzeit-, ToS, Fensters zum Ausführen eines Wartungsereignisses für eine flüchtige Speichervorrichtung, die mit einem Speichercontroller über eine Speicherdatenschnittstelle gekoppelt ist;
Mittel zum Liefern (304) eines Interrupt-Signals an eine Verarbeitungseinheit, so dass ein Interrupt-Handler eines Betriebssystems, das auf der Verarbeitungseinheit läuft, das Interrupt-Signal empfängt;
Mittel zum Bestimmen (306) einer Priorität für das Wartungsereignis mit dem Interrupt-Handler; und
Mittel zum Planen (308) des Wartungsereignisses auf eine Eingangswarteschlange eines Schedulers des Betriebssystems gemäß der Priorität.

9. System nach Anspruch 8, ferner umfassend:
Mittel zum Ausführen des Wartungsereignisses für die flüchtige Speichervorrichtung während des ToS Fensters.

10. System nach Anspruch 8, ferner umfassend:
Mittel zum Ermitteln, dass das ToS-Fenster abgelaufen ist, ohne das Wartungsereignis auszuführen;
Mittel zum Blockieren eines Verkehrs auf der Verarbeitungseinheit; und
Mittel zum Ausführen des Wartungsereignisses für die flüchtige Speichervorrichtung.

11. System nach Anspruch 8, wobei das Wartungsereignis eine oder mehrere von einer Auffrischungsoperation, einer Kalibrierungsoperation und einer Trainingsoperation zum periodischen Warten der flüchtigen Speichervorrichtung umfasst.

12. System nach Anspruch 8, wobei die flüchtige Speichervorrichtung einen dynamischen Speicher mit wahlfreiem Zugriff, DRAM, aufweist.

13. System nach Anspruch 8, wobei das Mittel zum Bestimmen der Priorität für das Wartungsereignis umfasst:
Mittel zum Zugreifen auf eine Nachschlagetabelle mit dem Interrupt-Handler des Betriebssystems und Auswählen der Priorität basierend auf einem oder mehreren von einer Art von einem Wartungsereignis, einer aktuellen Last, die der Verarbeitungseinheit zugeordnet ist, und einer aktuellen Temperatur, die der flüchtigen Speichervorrichtung zugeordnet ist.

14. System nach Anspruch 8, wobei das Mittel zum Planen des Wartungsereignisses umfasst:
Mittel zum Hinzufügen eines Wartungs-Threads zu der Eingangswarteschlange eines Kernel-Schedulers des Betriebssystems.

15. Computerprogramm, das Anweisungen umfasst, um zu bewirken, dass mindestens ein Computer die Schritte gemäß einem der Ansprüche 1-7 ausführt.

## Revendications

1. Procédé de planification d'événements de maintenance de mémoire volatile, le procédé comprenant :
un contrôleur de mémoire déterminant (302) une fenêtre de temps de service, ToS, pour exécuter un événement de maintenance pour un dispositif de mémoire volatile couplé au contrôleur de mémoire via une interface de données de mémoire ;
le contrôleur de mémoire fournissant (304) un signal d'interruption à une unité de traitement, de sorte qu'un gestionnaire d'interruptions d'un système d'exploitation se déroulant sur l'unité de traitement reçoit le signal d'interruption ;
la détermination (306) avec le gestionnaire d'interruptions d'une priorité pour l'événement de maintenance ; et
la planification (308) de l'événement de maintenance par insertion avec le gestionnaire d'interruptions d'un nouveau fil pour l'événement de maintenance dans une file d'attente d'entrée d'un planificateur du système d'exploitation selon la priorité.

2. Procédé selon la revendication 1, comprenant en outre :
l'exécution de l'événement de maintenance pour le dispositif de mémoire volatile durant la fenêtre de ToS.

3. Procédé selon la revendication 1, comprenant en outre :
le fait de déterminer que la fenêtre de ToS a expiré sans l'exécution de l'événement de maintenance ;
la mise en attente du trafic sur l'unité de traitement ; et
l'exécution de l'événement de maintenance pour le dispositif de mémoire volatile.

4. Procédé selon la revendication 1, dans lequel l'événement de maintenance comprend une ou plusieurs parmi une opération de rafraîchissement, une opération de calibrage et une opération d'apprentissage pour un service périodique du dispositif de mémoire volatile.

5. Procédé selon la revendication 1, dans lequel le dispositif de mémoire volatile comprend un dispositif de mémoire vive dynamique, DRAM.

6. Procédé selon la revendication 1, dans lequel la détermination de la priorité pour un événement de maintenance comprend l'accès à une table de conversion avec le gestionnaire d'interruptions du système d'exploitation et la sélection de la priorité avec le gestionnaire d'interruptions sur la base d'un ou de plusieurs parmi un type d'événement de maintenance, une charge actuelle associée à l'unité de traitement et une température actuelle associée au dispositif de mémoire volatile.

7. Procédé selon la revendication 1, dans lequel la planification de l'événement de maintenance comprend l'ajout d'un fil de service à la file d'attente d'entrée d'un planificateur au niveau du noyau du système d'exploitation.

8. Système de planification d'événements de maintenance de mémoire volatile, le système comprenant :
un moyen pour déterminer (302) une fenêtre de temps de service, ToS, pour exécuter un événement de maintenance pour un dispositif de mémoire volatile couplé à un contrôleur de mémoire via une interface de données de mémoire ;
un moyen pour fournir (304) un signal d'interruption à une unité de traitement, de sorte qu'un gestionnaire d'interruptions d'un système d'exploitation se déroulant sur l'unité de traitement reçoit le signal d'interruption ;
un moyen pour déterminer (306) avec le gestionnaire d'interruptions une priorité pour l'événement de maintenance ; et
un moyen pour planifier (308) l'événement de maintenance dans une file d'attente d'entrée d'un planificateur du système d'exploitation selon la priorité.

9. Système selon la revendication 8, comprenant en outre :
un moyen pour exécuter l'événement de maintenance pour le dispositif de mémoire volatile durant la fenêtre de ToS.

10. Système selon la revendication 8, comprenant en outre :
un moyen pour déterminer que la fenêtre de ToS a expiré sans l'exécution de l'événement de maintenance ;
un moyen pour mettre en attente le trafic sur l'unité de traitement ; et
un moyen pour exécuter l'événement de maintenance pour le dispositif de mémoire volatile.

11. Système selon la revendication 8, dans lequel l'événement de maintenance comprend une opération de rafraîchissement, une opération de calibrage et une opération d'apprentissage pour un service périodique du dispositif de mémoire volatile.

12. Système selon la revendication 8, dans lequel le dispositif de mémoire volatile comprend un dispositif de mémoire vive dynamique, DRAM.

13. Système selon la revendication 8, dans lequel le moyen pour déterminer la priorité pour l'événement de maintenance comprend :
un moyen pour accéder à une table de conversion avec le gestionnaire d'interruptions du système d'exploitation et pour sélectionner la priorité sur la base d'un ou de plusieurs parmi un type d'événement de maintenance, une charge actuelle associée à l'unité de traitement et une température actuelle associée au dispositif de mémoire volatile.

14. Système selon la revendication 8, dans lequel le moyen pour planifier l'événement de maintenance comprend :
un moyen pour ajouter un fil de service à la file d'attente d'entrée d'un planificateur au niveau du noyau du système d'exploitation.

15. Programme d'ordinateur comprenant des instructions pour amener au moins un ordinateur à réaliser les étapes selon l'une quelconque des revendications 1 à 7.
